# EUROPÄISCHE PATENTSCHRIFT

(11) **EP 2 825 376 B1**
(45) Veröffentlichungstag und Bekanntmachung des Hinweises auf die Patenterteilung: **10.05.2017**
(21) Anmeldenummer: 13706970.4
(22) Anmeldetag: 26.02.2013
(51) Int. Cl.: B32B 1/08, F16L 11/08, B32B 5/02, B32B 25/10, B32B 25/14, B32B 25/20

(54) **FLEXIBLE SCHLAUCHLEITUNG**
FLEXIBLE HOSE LINE
CONDUITE FLEXIBLE

(30) Priorität: 12.03.2012 DE 102012005026
(43) Veröffentlichungstag der Anmeldung: 21.01.2015
(73) Patentinhaber: VERITAS AG, 63571 Gelnhausen (DE)
(72) Erfinder: VON HOOREN, Marc, 63579 Freigericht (DE); KNOPP, Matthias, 63486 Bruchköbel (DE); HATTAß, Dirk, 63584 Gründau (DE)
(74) Vertreter: Patentship Patentanwaltsgesellschaft mbH
(86) Internationale Anmeldenummer: PCT/EP2013/053768
(87) Internationale Veröffentlichungsnummer: WO 2013/135479

(56) Entgegenhaltungen:
- WO-A1-99/61227
- WO-A1-2012/000713
- DE-A1- 10 241 914
- US-A- 4 330 017
- US-A1- 2004 197 510

## Beschreibung

Die Erfindung betrifft eine flexible Schlauchleitung, insbesondere für Ölleitungen, mit wenigstens einer ersten Schicht, einer weiter außerhalb liegenden zweiten Schicht und einer Verstärkungsschicht. Dabei weist wenigstens die erste oder die zweite Schicht Fluorelastomer auf.

Die Verwendung von Schlauchleitungen für die Ölversorgung von Abgasturboladern für Verbrennungsmotoren ist bereits bekannt.

Es ist durch die Schlauchleitung ermöglicht, den Abgasturbolader mit dem Ölkreislauf des Verbrennungsmotors durch jeweils eine Hin- und eine Rückleitung zu verbinden und die Ölversorgung des Abgasturboladers sicherzustellen. Abgasturbolader dienen zur Vorverdichtung der benötigten Luft zur Leistungssteigerung bei Verbrennungsmotoren. Durch die Impulsübertragung des Abgasstromes aus dem Verbrennungsmotor auf die angesaugte Luft sind Abgasturbolader Temperaturen von ca. 1000°C ausgesetzt und erreichen hohe Drehzahlen. Meist sind die Drehlager der Turbinen als Gleitlager ausgeführt, welche kontinuierlich mit Schmierstoffen versorgt werden müssen, um den Verschleiß zu reduzieren und zu gewährleisten, dass auch bei den auftretenden hohen Drehzahlen der Schmierfilm in den Lagerstellen nicht abreißt. Des Weiteren dient der zugeführte Schmierstoff auch zur Kühlung durch Wärmeabfuhr.

Durch die Anwendung sind die entsprechenden Schlauchleitungen kontinuierlich dem Druck und der Temperatur des Fluids in der Leitung, der Motorraumtemperatur und der Abstrahlwärme nahegelegener Motorkomponenten und des Abgasturboladers ausgesetzt. Des Weiteren sind die mechanischen Belastungen durch Vibration und Reibung und die chemische Beständigkeit gegenüber dem transportierten Fluid sowie die Beständigkeit gegen die im Motorraum auftretenden Umwelteinflüsse wie etwa Wasser und Eis weitere Anforderungen an die Konstruktion von Schlauchleitungen. Bei den Schlauchleitungen gibt es unterschiedliche Ausführungen. Zum einen können die Schlauchleitungen als sogenannte Formschläuche konstruiert sein, zum Anderen als frei verlegbare Schlauchleitungen. Formschläuche werden bereits bei der Herstellung in der Montageendlage vorgeformt. Dies kann durch entsprechende Werkstoffauswahl und eine Vernetzung der verwendeten Kunststoffe auf einem Formdorn durchgeführt werden. Bei der Montage dieser Schlauchleitungen werden diese auf freie Biegung und Torsion beansprucht, so dass weitere Anforderungen darin bestehen, dass die Leitungen während der Montage und im späteren Betrieb nicht knicken oder zusammenfallen, was den wirksamen Leitungsquerschnitt reduzieren würde oder den Fluidtransport vollständig blockieren würde.

Diesen Anforderungen versucht man dadurch zu begegnen, dass in den Leitungen mehrere Werkstoffschichten miteinander kombiniert werden. Aufgrund des anhaltenden Entwicklungstrends im Automobilbereich findet eine kontinuierliche Verkleinerung des Bauraums im Motorraum für die entsprechenden Motorkomponenten statt, wobei sich die Anforderungen für eine hohe Qualität und Lebensdauer weiter erhöhen.

Auf dem Gebiet der flexiblen Schlauchleitungen ist es bekannt, eine Schlauchleitung auszubilden, indem die innere Schicht, die sogenannte Sperrschicht aus PTFE besteht, auf diese Schicht eine Schicht aus Glasfaser zur Verstärkung aufgebracht ist, und dann eine weitere Schicht aus PTFE vorgesehen ist. Die Außenschicht ist ein Edelstahlgeflecht. Derartige Leitungen können nicht als Formschlauch mit einem voreingestellten Verlauf hergestellt werden, wodurch diese nur als frei verlegte Schlauchleitung montiert werden. Durch die Edelstahlummantelung weisen derartige Leitungen eine hohe Torsions- und Biegesteife auf, wobei große Verlegeradien vorgesehen werden müssen. Bei der Herstellung, insbesondere bei der Verarbeitung des Edelstahlgeflechts fallen Späne an, die nicht in die Schlauchleitung eingebracht werden dürfen.

Aus der DE 102 41 914 A1 ist eine Schlauchleitung bekannt, welche aus vier Schichten besteht. Dieser Schichtaufbau umfasst eine Innenschicht aus Fluorkautschuk (FKM), eine Schicht aus Silikonkautschuk, eine Verstärkungsschicht aus Aramidfaser und eine Außenschicht aus Silikonkautschuk. Die Schlauchleitung kann in einem Dauertemperaturbereich bis 180°C eingesetzt werden. Aufgrund des Aufbaus sind derartige Schlauchleitungen nur für niedrigen Betriebsdruck ausgelegt und werden im Rücklauf- oder Niederdruckbereich eingesetzt.

In der US 4,330,017 ist ein Kraftstoffschlauch für Automobile beschrieben welcher einen aus zwei Schichten bestehenden Gummischlauch umfasst, der mit einer Verstärkungsfaserschicht und mit einer äußeren Schutzschicht aus Gummi bedeckt ist.

In der WO 99/61227 ist ein Kraftstoffschlauch beschrieben, welcher eine Kraftstoffsperrschicht aus Fluorelastomer, eine Verstärkungsschicht und eine äußere Schicht umfasst.

In der US 2004/0197510 A1 ist ein flexibler Kraftstoffschlauch beschrieben, welcher eine Sperrschicht aus Fluorpolymer, eine Schicht aus synthetischem Polymer und eine äußere Schutzschicht umfasst.

In der WO 2012/000713 A1 ist ein Schlauch beschrieben, welcher einen eingebetteten Festigkeitsträger auf der Basis eines Polyoxadiazols umfasst.

Die Aufgabe der vorliegenden Erfindung ist es, eine Schlauchleitung zur Verfügung zu stellen, welche für höhere Dauertemperaturen vorzugsweise bis 230°C eingesetzt werden kann, den betrieblichen Anforderungen gerecht wird, kostengünstig in der Herstellung ist und eine einfache Montage ermöglicht und als Formschlauch herstellbar ist, ohne zum Knicken zu neigen.

Diese Aufgabe wird gelöst durch die erfindungsgemäße Schlauchleitung mit wenigstens einer ersten Schicht und einer weiter außerhalb liegenden zweiten Schicht und einer Verstärkungsschicht, wobei die erste Schicht Fluorelastomer aufweist, wobei die Verstärkungsschicht Glasfasern aufweist. Hierdurch weist die Schlauchleitung eine ausreichende Stabilität gegen die Druckbeanspruchung durch das Fluid und gegen Verformungen im Betrieb auf. Dabei ist durch die Verwendung von Glasfasern verzugsweise in Form von Glasfaserfäden, die auf die Schlauchleitung aufgebracht werden, eine kostengünstige Stabilisierung gegenüber mechanischen Belastungen durchführbar. Die Verarbeitung von Glasfasern zur Einbringung in Schichtwerkstoffe ist aufgrund der Werkstoffeigenschaften von Glasfasern mit geringem Aufwand möglich, im Vergleich zu weiteren Fasermaterialen wie Aramidfasern. Glasfasern haben eine geringe Aufnahmefähigkeit von Feuchte und einen positiven Wärmeausdehnungskoeffizienten, weiterhin zeichnen sie sich durch eine hohe Zugfestigkeit, auch bei hohen Temperaturen bis 260° Celsius, aus, was der erfindungsgemäßen Schlauchleitung die Flexibilität und gleichzeitige Festigkeit ermöglicht. Die Eigenschaften der Glasfaser stellen über den gesamten Anwendungstemperaturbereich die Haltbarkeit der Schlauchleitung bei niedrigen Materialkosten sicher.

Die erfindungsgemäße flexible Schlauchleitung zeichnet sich dadurch aus, dass sie eine gute Beständigkeit gegen das leitende Fluid, insbesondere Öl, aufweißt, sowie bei Dauertemperaturen bis 230°C einsetzbar ist.

Die Verstärkungsschicht ist zwischen der ersten und der zweiten Schicht vorgesehen Hierdurch ist sichergestellt, dass die Verstärkungsschicht vor Umwelteinflüssen, welche von außen auf die Schlauchleitung einwirken durch die zweite Schicht geschützt ist.

In einer weiteren bevorzugten Ausführungsform kann die erste Schicht Fluorkautschuk (FKM) aufweisen. Durch die Verwendung kann die Schlauchleitung als Sperrschicht gegenüber dem Fluid, besonders gegenüber Öl, verwendet werden. Weiterhin ist die Verwendbarkeit bei hohen Dauertemperaturen gewährleistet.

In einer weiteren bevorzugten Ausführungsform kann die erste Schicht Perfluorkautschuk (FFKM) aufweisen. Durch diese Verwendung kann eine hohe Resistenz gegenüber dem transportierten Fluid sichergestellt werden. Die Verwendbarkeit der Schlauchleitung ist damit bei sehr hohen Dauertemperaturen möglich. Es kann vorteilhaft sein, wenn die erste Schicht thermoplastisches Fluorelastomer-Vulkanisat (F-TPE-V) enthält, wobei die erste Schicht äußerst dünn und auf einfache Weise hergestellt werden kann.

In einer weiteren Ausführungsform kann die zweite Schicht Silikonkautschuk (VMQ) aufweisen. Dadurch ist die Schlauchleitung bei hohen Temperaturen einsetzbar und bietet eine ausreichende Beständigkeit gegen die von außen einwirkenden Umwelteinflüsse für die Verstärkungsschicht. Vorteilhaft kann der Silikonkautschuk (VMQ) nicht nur mit peroxidischer Vernetzung, sondern auch mit platinkatalysierter Additionsvernetzung hergestellt sein, wodurch aufgrund des Herstellprozesses kürzere Taktzeiten erreicht werden können.

In einer weiteren bevorzugten Ausführungsform kann die zweite Schicht Fluorsilikonkautschuk (FVMQ) aufweisen. Hierdurch wird eine besonders gute Beständigkeit gegen Benzine und Öle sichergestellt.

In einer weiteren bevorzugten Ausführungsform kann die erste Schicht die gleiche Wandstärke aufweisen wie die zweite Schicht. Hierdurch kann die Sperrfunktion der ersten Schicht verstärkt werden, sowie eine weitere Versteifung der Schlauchleitung erfolgen, um diese einem gewünschten Flexibilitätsgrad anzupassen.

In einer weiteren bevorzugten Ausführungsform kann die erste Schicht eine größere Wandstärke aufweisen als die zweite Schicht. Hierdurch ist die zweite Schicht als dünne Deck- und Schutzschicht für die Verstärkungsschicht ausgeführt. Dadurch ist eine bessere Wärmeabfuhr an die Umgebung möglich und eine Verringerung der Steifigkeit der Schlauchleitung, um ein vereinfachtes Montieren zu ermöglichen. Zusätzlich ist durch die Materialeinsparung eine Reduzierung der Herstellkosten möglich.

Besonders vorteilhaft ist es, wenn die erste Schicht eine Dicke von wenigstens 0,5 mm bis zu 3,0 mm aufweist. Hierdurch ist die Funktion als Sperrschicht optimal sichergestellt. Ein Unterschreiten von 0,5 mm kann die Sperrfunktion nicht mehr sicherstellen. Ein Überschreiten der Dicke kann bei der weiteren Herstellung oder der Montage zum Knicken führen, wodurch besonders beim weiteren Herstellprozess, insbesondere bei dem Aufbringen von aufliegenden Schichten, Wellen oder Falten in den einzelnen Schichten entstehen können. Die zweite Schicht kann besonders vorteilhaft wenigstens eine Dicke von 50 µm bis 0,2 mm aufweisen. Hierdurch ist die Funktion als Deck- und Schutzschicht optimal gewährleistet.

In einer weiteren bevorzugten Ausführungsform kann die erste Schicht die Innenschicht sein, die zweite Schicht die Außenschicht. Dies führt zu einem kompakten Aufbau der Schlauchleitung und zu einem verringerten Querschnitt. Zusätzlich führt dieser Aufbau mit nur drei Schichten zur Kostenersparnis, wobei dies auch durch die vereinfachte Montage ermöglicht wird.

In einer weiteren bevorzugten Ausführungsform kann die Verstärkungsschicht, die aus Glasfasern, wie auch Glasfaserfäden bestehen kann, auf die erste Schicht, aufgeflochten oder aufgestrickt sein. Dies führt zu einer maschenförmigen Umschließung der ersten Schicht, wodurch die erste und die zweite Schicht miteinander in direkten Kontakt kommen können. Hierdurch wird eine gleichmäßige Kräfteverteilung von der ersten in die zweite Schicht erreicht. Durch die Maschenstruktur der Verstärkungsschicht werden die Betriebskräfte flächig verteilt. Es kann auch kein Kontakt zwischen der ersten und der zweiten Schicht vorgesehen sein, so dass sämtliche Betriebskräfte in die Verstärkungsschicht geleitet werden und die erste und die zweite Schicht entlastet sind. Dies führt zu einer geringeren Kräftebeanspruchung der Schichten.

In einer weiteren bevorzugten Ausführungsform kann die Verstärkungsschicht, die aus Glasfasern, wie auch Glasfaserfäden bestehen kann, auf die erste Schicht gewickelt sein. Dies führt zu einer verstärkten Druckspannung auf die erste Schicht und kann verwendet werden, um Pulsationen des Fluids zu kompensieren.

In einer weiteren bevorzugten Ausführungsform ist die Schlauchleitung bei einer Dauertemperatur, die auf die Schlauchleitung ohne Schäden einwirken kann, bis 230°C einsetzbar. In einer besonders bevorzugten Ausführungsform ist die Schlauchleitung bei einer kurzzeitigen Spitzentemperatur bis 260°C einsetzbar, ohne Schäden an der Schlauchleitung zu verursachen. Hierdurch ist der Einsatz auch in durch den Entwicklungstrend immer geringer werdenden Bauraum innerhalb des Motorraums möglich, da die räumliche erforderliche Distanz zu wärmeabstrahlenden Komponenten im Motorraum verringert werden kann.

In einer weiteren bevorzugten Ausführungsform kann die Leitung zwischen dem Motorölkreislauf und dem Abgasturbolader angeordnet sein. Durch diese Anordnung ist ein einfaches Montieren einer Ölverbindung möglich. Durch die Anordnung kann auch bei Toleranz- oder Maßabweichungen der Anschlussbauteile, wie etwa Rohrstutzen, die Montage ermöglicht werden. Es ist durch die Anordnung möglich, auch komplexe Bauraumgeometrien zu nutzen.

Im Folgenden wird ein Ausführungsbeispiel der vorliegenden Erfindung anhand einer Zeichnung näher erläutert. Es zeigen:
- Fig. 1: eine zweidimensionale Ansicht einer flexiblen Schlauchleitung.
- Fig. 2: eine bevorzugte Anordnung im Ölkreislauf für PKW-Motoren.

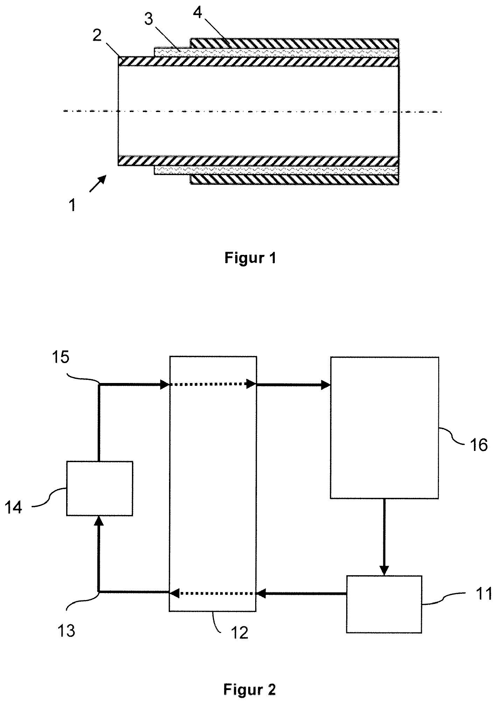

Die in **Figur 1** dargestellte Schlauchleitung 1 besteht aus drei aufeinanderfolgend angeordneten Schichten 2, 3, 4. Dabei sind die einzelnen Schichten zur besseren Übersicht jeweils freigeschnitten dargestellt.

Die Schlauchleitung 1 umfasst eine erste Schicht 2, eine Verstärkungsschicht 3 und eine zweite Schicht 4. Dabei enthält die erste Schicht 2 Fluorkautschuk (FKM), alternativ kann diese auch Perfluorkautschuk (FFKM) enthalten. Die Verstärkungsschicht 3 enthält Glasfasern, welche gewebt, geflochten, gestrickt oder spiralisiert auf die Schlauchleitung aufgebracht werden. Die zweite Schicht 4 enthält Silikonkautschuk (VMQ), alternativ kann diese auch Fluorsilikonkautschuk (FVMQ) enthalten. Die Schichten können unterschiedliche Dicken haben, jedoch ist es auch möglich, dass alle Schichten die gleiche Dicke aufweisen.

Die **Figur 2** zeigt die Anordnung im Ölkreislauf eines PKW-Verbrennungsmotors. Hierbei weist der Ölkreislauf 12 üblicherweise eine Ölpumpe 11 auf, die das Öl durch den gesamten Kreislauf pumpt. Dabei durchläuft das Öl sämtliche Komponenten 12, wobei aus Gründen der vereinfachten Darstellung diese unter dem Block 12 zusammengefasst sind. Dazu gehören beispielsweise diverse Schaltventile, sowie der Ölkühler und -filter. Dadurch wird das Öl über die erfindungsgemäße flexible Schlauchleitung 13 zum Abgasturbolader 14 transportiert und durch die weitere erfindungsgemäße Schlauchleitung 15 wieder zum Ölkreislauf befördert, um abschließend durch den Motor 16 geleitet zu werden. Die flexible Schlauchleitung kann an entsprechend gebildeten Rohrstutzen befestigt sein, welche an beiden Enden zur Befestigung vorgesehen sind.

## Patentansprüche

1. Flexible Schlauchleitung (1), insbesondere für eine Ölleitung,
mit wenigstens einer ersten Schicht (2), einer weiter außerhalb liegenden zweiten Schicht (4) und einer Verstärkungsschicht (3), wobei die erste (2) Schicht Fluorelastomer aufweist,
**dadurch gekennzeichnet, dass** die Verstärkungsschicht (3) Glasfasern enthält, dass die Verstärkungsschicht (3) zwischen der ersten (2) und der zweiten Schicht (4) vorgesehen ist, dass die zweite Schicht (4) Silikonkautschuk (VMQ) oder Fluorsilikonkautschuk (FVMQ) aufweist, und dass die erste (2) und die zweite Schicht (4) aneinander anliegen und dabei die Verstärkungsschicht (3) durchdringen.

2. Flexible Schlauchleitung (1) nach Anspruch 1, **dadurch gekennzeichnet, dass** die erste (2) und die zweite Schicht (4) an der Verstärkungsschicht (3) anliegen.

3. Flexible Schlauchleitung (1) nach wenigstens einem der vorhergehenden Ansprüche, **dadurch gekennzeichnet, dass** die erste Schicht (2) Fluorkautschuk (FKM) aufweist, bevorzugt daraus besteht oder Perfluorkautschuk (FFKM) aufweist oder bevorzugt daraus besteht.

4. Flexible Schlauchleitung (1) nach wenigstens einem der vorhergehenden Ansprüche, **dadurch gekennzeichnet, dass** die erste Schicht (2) die gleiche Wandstärke wie die zweite Schicht (4) aufweist oder eine größere Wandstärke aufweist als die zweite Schicht (4).

5. Flexible Schlauchleitung (1) nach wenigstens einem der vorhergehenden Ansprüche, **dadurch gekennzeichnet, dass** die erste Schicht (2) die innerste Schicht, bevorzugt die Innenschicht ist, und dass die zweite Schicht (4) die äußere Schicht, bevorzugt die Außenschicht der Schlauchleitung (1) ist.

6. Flexible Schlauchleitung (1) nach wenigstens einem der vorhergehenden Ansprüche, **dadurch gekennzeichnet, dass** die Verstärkungsschicht (3) auf die erste Schicht (2) aufgeflochten oder aufgestrickt ist.

7. Flexible Schlauchleitung (1) nach wenigstens einem der vorhergehenden Ansprüche, **dadurch gekennzeichnet, dass** die Verstärkungsschicht (3) auf die erste Schicht (2) aufgewickelt ist.

8. Anordnung mit einer flexiblen Schlauchleitung (1) nach wenigstens einem der vorhergehenden Ansprüche, **dadurch gekennzeichnet, dass** die Schlauchleitung (1) vorgesehen ist zwischen einem Motorölkreislauf (12) und einem Abgasturbolader (14) und die Schlauchleitung (1) an die Zuleitung von Öl (13) an den Abgasturbolader (14) und/oder an die Rückleitung(15) zum Motorölkreislauf (12) angeschlossen ist.

## Claims

1. Flexible hose line (1), in particular for an oil line, comprising at least a first layer (2), a second layer (4) situated further outside and a reinforcing layer (3), wherein the first (2) layer comprises fluoroelastomer,
**characterized in that** the reinforcing layer (3) comprises glass fibers, the reinforcing layer (3) is provided between the first (2) and the second layer (4), the second layer (4) comprises silicon rubber (VMQ) or fluorosilicone rubber (FVMQ), and the first (2) and second layer (4) abut against each other and thereby penetrate the reinforcing layer (3).

2. Flexible hose line (1) according to claim 1, **characterized in that** the first (2) and the second layer (4) abut against the reinforcing layer (3).

3. Flexible hose line (1) according to at least one of the preceding claims, **characterized in that** the first layer (2) comprises fluororubber (FKM), preferably consists out of it or it comprises perfluorrubber (FFKM) or preferably consists out of it.

4. Flexible hose line (1) according to at least one of the preceding claims, **characterized in that** the first layer (2) has the same wall thickness as the second layer (4), or it has a greater wall thickness than the second layer (4).

5. Flexible hose line (1) according to at least one of the preceding claims, **characterized in that** the first layer (2) is the innermost layer, preferably the inner layer, and the second layer (4) is the outer layer, preferably the external layer of the hose line (1).

6. Flexible hose line (1) according to at least one of the preceding claims, **characterized in that** the reinforcing layer (3) is braided or knitted on the first layer (2).

7. Flexible hose line (1) according to at least one of the preceding claims, **characterized in that** the reinforcing layer (3) is wound on the first layer (2).

8. Assembly comprising a hose line (1) according to at least one of the preceding claims, **characterized in that** the hose line (1) is provided between an engine oil circuit (12) and an exhaust gas turbocharger (14) and the hose line (1) is connected to the supply line of oil (13) to the exhaust gas turbocharger (14) and/or to the return line (15) to the engine oil circuit (12).

## Revendications

1. Conduite flexible (1), en particulier pour un oléoduc, comportant au moins une première couche (2), une deuxième couche (4) située plus à l'extérieur et une couche de renforcement (3), dans laquelle la première (2) couche comporte un fluoroélastomère,
**caractérisée en ce que** la couche de renforcement (3) contient des fibres de verre, la couche de renforcement (3) est prévue entre la première (2) couche et la deuxième couche (4), la deuxième couche (4) comporte du caoutchouc de silicone (VMQ) ou du caoutchouc de fluorosilicone (FVMQ), et la première (2) couche et la deuxième couche (4) sont adjacentes et ainsi percent la couche de renforcement (3).

2. Conduite flexible (1) selon la revendication 1, **caractérisée en ce que** la première (2) et la deuxième couche (4) s'appuient contre la couche de renforcement (3).

3. Conduite flexible (1) selon au moins l'une des revendications précédentes, **caractérisée en ce que** la première couche (2) comporte du fluorocaoutchouc (FKM), préférablement elle est composée de celui-ci, ou elle comprend du perfluorocaoutchouc (FFKM) ou préférablement elle est composée de celui-ci.

4. Conduite flexible (1) selon au moins l'une des revendications précédentes, **caractérisée en ce que** la première couche (2) a la même épaisseur de paroi que la deuxième couche (4), ou elle a une épaisseur de paroi plus grande que la deuxième couche (4).

5. Conduite flexible (1) selon au moins l'une des revendications précédentes, **caractérisée en ce que** la première couche (2) est la couche la plus intérieure, préférablement elle est la couche intérieure, et que la deuxième couche (4) est la couche extérieure, préférablement elle est la couche externe de la conduite flexible (1).

6. Conduite flexible (1) selon au moins l'une des revendications précédentes, **caractérisée en ce que** la couche de renforcement (3) est tressée ou tricotée sur la première couche (2).

7. Conduite flexible (1) selon au moins l'une des revendications précédentes, **caractérisée en ce que** la couche de renforcement (3) est enroulée sur la première couche (2).

8. Assemblage comportant une conduite flexible (1) selon au moins l'une des revendications précédentes, **caractérisée en ce que** la conduite flexible (1) est prévue entre un circuit d'huile moteur (12) et un turbocompresseur à gaz d'échappement (14) et la conduite flexible (1) est raccordée à la conduite d'amenée d'huile (13) au turbocompresseur à gaz d'échappement (14) et/ou à la conduite de retour (15) au circuit d'huile moteur (12).
